# EUROPEAN PATENT SPECIFICATION

(11) **EP 4 422 137 B1**
(45) Date of publication and mention of the grant of the patent: **29.04.2026**
(21) Application number: 23157852.7
(22) Date of filing: 21.02.2023
(51) Int. Cl.: H04L 41/0895, H04L 41/142, H04L 41/14

(54) **METHOD FOR OPTIMIZING A MODIFICATION OF AN AD-HOC-EDGE NETWORK WITH A RESOURCE-AWARE SERVICE ALLOCATION STRATEGY AND A SYSTEM FOR EXECUTING SUCH A METHOD**
VERFAHREN ZUR OPTIMIERUNG EINER ÄNDERUNG EINES AD-HOC-EDGE-NETZWERKS MIT RESSOURCENBEWUSSTER DIENSTZUWEISUNGSSTRATEGIE UND SYSTEM ZUR DURCHFÜHRUNG EINES SOLCHEN VERFAHRENS
PROCÉDÉ D'OPTIMISATION D'UNE MODIFICATION D'UN RÉSEAU AD-HOC EDGE AVEC UNE STRATÉGIE D'ATTRIBUTION DE SERVICE SENSIBLE AUX RESSOURCES ET SYSTÈME POUR EXÉCUTER UN TEL PROCÉDÉ

(43) Date of publication of application: 28.08.2024
(73) Proprietor: Airbus S.A.S., 31700 Blagnac (FR)
(72) Inventor: MILHEIRO MENDES, Paulo Jorge, 82024 Taufkirchen (DE)
(74) Representative: LKGLOBAL Partnerschaftsgesellschaft mbB

(56) References cited:
- US-A1- 2021 117 249
- WANG YIMENG ET AL: "IndustEdge: A Time-Sensitive Networking Enabled Edge-Cloud Collaborative Intelligent Platform for Smart Industry", IEEE TRANSACTIONS ON INDUSTRIAL INFORMATICS, IEEE SERVICE CENTER, NEW YORK, NY, US, vol. 18, no. 4, 8 September 2021 (2021-09-08), pages 2386 - 2398, XP011896530, ISSN: 1551-3203, [retrieved on 20220104], DOI: 10.1109/TII.2021.3104003
- KAUR KIRANPREET ET AL: "Latency and network aware placement for cloud-native 5G/6G services", 2022 IEEE 19TH ANNUAL CONSUMER COMMUNICATIONS & NETWORKING CONFERENCE (CCNC), IEEE, 8 January 2022 (2022-01-08), pages 114 - 119, XP034083424, DOI: 10.1109/CCNC49033.2022.9700582
- JIAO ZHIQIANG ET AL: "C4ISR Service Deployment Based on an Improved Quantum Evolutionary Algorithm", IEEE TRANSACTIONS ON NETWORK AND SERVICE MANAGEMENT, IEEE, USA, vol. 18, no. 2, 26 January 2021 (2021-01-26), pages 2405 - 2419, XP011860408, DOI: 10.1109/TNSM.2021.3054752
- LU DUO ET AL: "A Secure Microservice Framework for IoT", 2017 IEEE SYMPOSIUM ON SERVICE-ORIENTED SYSTEM ENGINEERING (SOSE), IEEE, 6 April 2017 (2017-04-06), pages 9 - 18, XP033105212, DOI: 10.1109/SOSE.2017.27

## Description

### Technical Field

The present invention relates to a method for optimizing a modification of an ad-hoc-edge network with a resource-aware service allocation strategy and a system for executing such a method. In particular, the invention relates to a method for optimizing a modification of an ad-hoc-edge network with a resource-aware service allocation strategy for deployment of a multitude of correlated microservices, which define a service, on an ad-hoc-edge network topology comprising a multitude of edge devices and a multitude of mobile computational devices with limited resources, interconnected in an ad-hoc manner, and a system for executing such a method.

### Background

The increased usage of mobile data services is having a significant impact on the internet architecture. The development of latency-critical services, such as video stream analysis and augmented reality, requires extensive real-time computing. In this context, Mobile Edge Computing, MEC, provides computing services at the network edge, aiming to improve the performance required by latency-critical services, mostly based on data collected by mobile users and vehicles. However, MEC relies on a set of predefined edge devices used to deploy monolithic service, since service deployment does not change according to the needs of different services and dynamic environmental setups. Being deployed at the edge of a mobile network, services may fail to provide the required quality when the edge device is too far away from the service consumers.

Thus, edge computing concepts are being developed to reduce the latency of cloud services based on a distributed computing paradigm that brings computation and data storage closer to the location where it is needed, in order to improve response times and save bandwidth.

Processing services in edge nodes, and not in a cloud, brings several benefits like relieving the limitations coming from Internet bandwidth and reducing energy consumption in datacenters. By allowing processing data in a node that is closer to network edges, rather than in the data center, edge computing contributes to decrease the Internet delay based on closer communication distance. Moreover, by keeping data close to the sources, private data does not need to be uploaded to data centers.

Edge computing frameworks, such as the Multi-access Edge Computing developed by ETSI, focus on the relationship between edge and cloud to achieve lower delay and higher bandwidth. However, MEC does consider scenarios in which different edge devices may cooperate with computational devices located in the far edge, within mobile networks encompassing vehicles, drones, aircrafts and even satellites. This cooperation may solve some of the limitations of edge computing, since due to the short range of waves used in 5G, edges may still be too far away from the service consumer to be able to support the required low delay.

In such a cooperation scenario between edge devices and far edge devices located in ad-hoc mobile networks, it is important to rely on computation allocation and scheduling frameworks and algorithms able to efficiently distribute a set of interconnected service tasks among a set of ad hoc nodes.

In this context several computational offloading schemes have been proposed, such as to support remote sensing in drone swarms. The proposed scheme aims to offload a deep learning-based recognition and Inference task in a networking scenario encompassing one computational device and one edge node. The goal is to minimize the resource consumption computational device, like a the battery power of a drone, while being able to perform the recognition and inference task. However, this scheme is not suitable for an ad-hoc system encompassing a large number of nodes.

When looking at ad-hoc mobile networks, some effort has been made in the context of vehicular mobile edge computing. Some attention has been paid to the investigation of algorithms able to minimize the average computation delay while considering the limitations of vehicle mobility and energy consumption. However, most of these proposals do not take into consideration the resource consumption optimization challenge.

Aiming to tackle this problem, Hossain et al. "Fuzzy based collaborative task offloading scheme in the densely deployed small-cell networks with multi-access edge computing," Applied Sciences, 2020 proposed a novel fuzzy-based collaborative task offloading scheme in order to accommodate more computation workload in the MEC system and so to reduce the dependence on remote cloud. However, it only offloads computing tasks to fixed edge servers, lacking the consideration of mobile computing servers, such as drones, aircraft or satellites.

Looking at a cooperative system between edge devices and mobile ad-hoc devices, a hybrid offloading scheme was proposed in "Energy- and Latency-Aware Hybrid Offloading 378 Algorithm for UAVs" IEEE Access 2019 Transactions on Vehicular Technology 2020, by combining offloading between airborne and ground computational devices, allowing drones to offload its tasks to nearby drones that have sufficient computation power and energy. Tasks can also be offloaded to an edge ground server.

However, these schemes normally assume that ad-hoc devices can directly communicate with edge devices located in a nearby access network. However, this assumption may not stand in scenarios encompassing drone swarms or aircraft that may have intermittent connectivity towards the ground, or a constellation of satellites that would like to avoid using resources to transfer a large amount of raw data to the ground.

Therefore, in order to tackle the ad-hoc-edge-cloud continuum, Liu et al. proposed in "Online Computation Offloading and Traffic Routing for UAV Swarms in Edge-Cloud Computing". IEEE, a joint computation offloading and routing optimization algorithm, which however does not consider the resource limitation challenge and so does not propose a method to fairness allocate computational tasks among a set of nodes.

Nevertheless, in recent years, a growing number of physical objects have been connected to the internet at an unprecedented rate, being able to collect large amounts of data. In this scenario, flying mobile computational devices such as drones, High Altitude Pseudo Satellites, HAPS, and satellites have attracted a lot of attention and have experienced rapid development. Drones have an increasing utilization due to their superiority in maneuverability and cost, being used in data collection scenarios such as express transportation, environment monitoring, and disaster relief. As for satellites, due to their global positioning and ultra-long distance communication, they are particularly essential when sensors and actuators are located in remote areas without service from terrestrial access networks. Moreover, satellites have a central role in all services that rely on earth observation data. This scenario may be extended in the future to exploit other flying vehicles as sources of data, such as Urban Air Mobility vehicles flying over metropolitan areas, and commercial aircrafts.

However, all mobile computational devices, like drones or the like, are operated with limited resources like battery power, bandwidth or latency, meaning that the development of solutions able to exploit the ad-hoc-edge-cloud continuum need to be efficient in terms of resource consumption.

WANG YIMENG ET AL: "IndustEdge: A Time-Sensitive Networking Enabled Edge-Cloud Collaborative Intelligent Platform for Smart Industry",IEEE TRANSACTIONS ON INDUSTRIAL INFORMATICS, IEEE SERVICE CENTER, NEW YORK, NY, US, vol. 18, no. 4, 8 September 2021 (2021-09-08), pages 2386-2398, XP011896530,ISSN: 1551-3203, DOI: 10.1109/TII.2021.3104003 [retrieved on 2022-01-04], discloses an edge-cloud collaborative intelligent (ECCI) platform is of great significance for the agile development and rapid deployment of ECCI applications, which are essential for realizing smart industry in the era of Industry 4.0. However, the existing platforms lack considering the high real-time latency demand of industrial operations, which severely hinders the development of smart industry and may even lead to severe industrial accidents. To effectively reduce the response latency of industrial applications, in this article, we propose an ECCI platform IndustEdge. It takes time-sensitive networking as the deterministic transport for the link layer, and provides an extensible ECCI orchestration component to reduce the system level latency. Furthermore, IndustEdge has an ECCI algorithm library for different collaborative modes and provides the complete life cycle management for ECCI applications. We implement platforms for both the real-world prototype and emulatedworld emulation, and conduct two case studies to evaluate the effectiveness of IndustEdge. KAUR KIRANPREET ET AL: "Latency and network aware placement for cloud-native 5G/6G services",2022 IEEE 19TH ANNUAL CONSUMER COMMUNICATIONS & NETWORKING CONFERENCE (CCNC), IEEE, 8 January 2022 (2022-01-08), pages 114-119, XP034083424,DOI: 10.1109/CCNC49033.2022.9700582 [retrieved on 2022-01-31], evidences that to meet ever more stringent requirements in terms of latency, 5G/6G networks are evolving from centralized to distributed architectures, for which the cloud-native paradigm with services decomposed into microservices is utmost relevant. This in turn raises the issue related to the distribution of network functions. In this paper, we introduce a novel microservice placement strategy considering the internal service composition, notably the communication between microservices. We formulate the placement as an optimization problem with the aim of minimizing end-to-end service latency. We solve the optimization problem with a combination of greedy and genetic algorithms.

JIAO ZHIQIANG ET AL: "C4ISR Service Deployment Based on an Improved Quantum Evolutionary Algorithm",IEEE TRANSACTIONS ON NETWORK AND SERVICE MANAGEMENT, IEEE, USA, vol. 18, no. 2, 26 January 2021 (2021-01-26), pages 2405-2419, XP011860408,DOI: 10.1109/ TNSM.2021.3054752 [retrieved on 2021-06-09], discloses that to overcome the limited communication bandwidth in the deployment of command, control, communications, computers, intelligence, surveillance, and reconnaissance (C4ISR) services, a service deployment platform was extended from the cloud to a terminal platform based on the concept of fog computing. Additionally, computing and memory resources on the terminal platform were used to alleviate the communication pressure due to the flow of combat information. A corresponding C4ISR service deployment model was constructed, and the quantum evolutionary algorithm, the shortest path algorithm, and the pairwise exchange method were combined to create a twolevel search algorithm. This method can plan the operational information flow path and service deployment simultaneously, thereby achieving the optimal deployment of services even under the constraints of limited communication bandwidth.

### Summary of the invention

It is an object to optimize a modification of an ad-hoc-edge network with a resource-aware service allocation strategy for deployment of a multitude of correlated microservices, which define a service, on an ad-hoc-edge network topology comprising a multitude of edge devices and a multitude of mobile computational devices with limited resources, interconnected in an ad-hoc manner. In other words, computational allocation schemes over the adhoc-edge-cloud continuum should be applied in order to reduce the resource consumption of mobile computational devices.

This object is achieved by means of the subjects of the independent claims. Illustrative embodiments will be found in the dependent claims and the following description.

According to one aspect, a method for optimizing a modification of an ad-hoc-edge network with a resource-aware service allocation strategy for deployment of a multitude of correlated microservices, which define a service, on an ad-hoc-edge network topology comprising a multitude of edge devices and a multitude of mobile computational devices with limited resources, interconnected in an ad-hoc manner, comprises the following steps:
Gathering, via a Software Defined Networking, SDN-, controller, network information of a current status of the ad-hoc-edge network,
Verifying, via the SDN controller, a possibility to accommodate each of the multitude of correlated microservices in the multitude of edge devices and the multitude of mobile computational devices, by verifying:
   that a remaining energy of each mobile computational device is sufficient to accommodate an execution time of at least one of the microservices, and/or
   that a bandwidth of a connection between one mobile computational device and at least one neighboring mobile computational device is sufficient for at least one of the microservices to receive an output of one of a precedent microservice,
Creating, via the SDN controller, a multitude of microservice allocation vectors, wherein each microservice allocation vector is assigned to one of the multitude of correlated microservices and to one of the multitude of edge devices or to one of the multitude of mobile computational devices,
Validating, via the SDN controller, a deployment of the multitude of correlated microservices based on a genetic operation, via an evolutionary algorithm, in which the service is represented by a multitude of chromosomes, each chromosome comprising a multitude of genes, wherein in each chromosome, each gene represents one corresponding microservice allocation vector, such that each chromosome is a potential candidate that can allocate the multitude of correlated microservices onto the ad-hoc network topology, wherein the quality of each chromosome is estimated based on a corresponding fitness value of the evolutionary algorithm, wherein the fitness value corresponds to the total cost of allocation of the multitude of microservices,
Arranging, via the SDN controller, the multitude of chromosomes in descending order according to a corresponding fitness value for each of the multitude of chromosomes,
Selecting, via the SDN controller, a chromosome with the highest fitness value representing an optimized allocation of microservices in the ad-hoc network topology,
such that a resource consumption in the ad-hoc network is minimized.

As mentioned above, a method for optimizing a modification of an ad-hoc-edge network with a resource-aware service allocation strategy is provided for deployment of a multitude of correlated microservices, which define a service, on an ad-hoc-edge network topology comprising a multitude of edge devices and a multitude of mobile computational devices with limited resources, interconnected in an ad-hoc manner.

The services are thereby not deployed as a monolithic element in a single computational device, but as a set of correlated microservices, each of which can be deployed and executed in a different mobile computational device. Hence, an efficient allocation and scheduling of computational tasks among the set of resource constrained devices, for example energy consumption, are important to ensure the proper execution of the overall service. The method comprises the following steps:
In a first step, via a Software Defined Networking, SDN-, controller, network information of a current status of the ad-hoc-edge network, is gathered. A "Software-defined networking, SDN-, technology" can be understood as an approach to network management that enables dynamic, programmatically efficient network configuration, in order to improve network performance and monitoring, making it more like cloud computing than traditional network management.

In other words, the SDN controller gathers in a certain frequency information about the identity of each of the devices that are part of the overall system, including the ad-hoc devices as well as the edge devices.

This is done based on a broadcast message that collects the identity, e.g. flat ID, of all visited nodes. The following rule is used to assign identifiers:
An odd value to identify an edge device; and an even value to identify an ad hoc device.

The cloud infrastructure is identified by a -1.

The broadcast message is forwarded by the SDN controller over all its interfaces with the indication of the System ID: this is the identifier of the used instantiation of the ad-hoc-edge-cloud system. It is assumed that mobile computational devices, edge devices and cloud devices support virtualization, meaning that resources can be shared among a set of ad-hoc-edge-cloud parallel systems.

In other words, every device belonging to the System ID that receives the broadcast message will first verify if the ID of all its neighbours is already included in the broadcast message header. If so, the device will stop broadcasting the message, add its own ID to the message header and send it back to the SDN controller, representing the source of the broadcast message. If some neighbours are still not included in the broadcast message, the device adds its own ID to the message header and sends it over all the interfaces leading to neighbours that did not receive the broadcast message. Every time a device adds its ID to a broadcast message header it also adds in the message payload: i) a vector with the IDs of its neighbours and the bandwidth of the communication towards them; ii) information about the energy status of the device.

Thus, based on the information gathering process, the SDN controller builds a graph representation of the System ID, in which each vertex is identified by the device ID, and is weighted based on the energy status of the corresponding device and each link is identified with the ID, or locator, of the neighbor node, and is weighted based on the bandwidth between the neighboring devices.

In a second step, via the SDN controller, a possibility to accommodate each of the multitude of correlated microservices in the multitude of edge devices and the multitude of mobile computational devices is verified. This is executed by verifying that a remaining energy of each mobile computational device is sufficient to accommodate an execution time of at least one of the microservices, and/or that a bandwidth of a connection between one mobile computational device and at least one neighboring mobile computational device is sufficient for at least one of the microservices to receive an output of one of a precedent microservice. The verifying is not restricted to these two verification steps and can be expanded as desired.

In other words, a microservice is accepted if it can be executed in at least one ad-hoc or edge device. In other words, if there is at least one ad-hoc or edge device that has enough remaining energy to accommodate the execution time of the microservice, and if the bandwidth to at least one neighbor is enough for the microservice to get the output of the precedent microservice, the microservice is accepted. If the microservice cannot be accommodated by at least one ad-hoc or edge device, this microservice is executed in a server, or respectively the cloud. If the microservice can be accommodated in the network, the identifier of the selected ad-hoc or edge devices is included in the microservice entry of the service list.

In a third step, via the SDN controller, a multitude of microservice allocation vectors is created, wherein each microservice allocation vector is assigned to one of the multitude of correlated microservices and to one of the multitude of edge devices or to one of the multitude of mobile computational devices. In other words, after all microservices are verified, the next step consists in creating service allocation vectors for each potential allocation of microservices into devices, as provided in the previous step. This means that each service can be represented based on different resource allocation, described in different service allocation vectors.

In a fourth step, via the SDN controller, a deployment of the multitude of correlated microservices based on a genetic operation is validated via an evolutionary algorithm, in which the service is represented by a multitude of chromosomes. Each chromosome comprises a multitude of genes, wherein in each chromosome, each gene represents one corresponding microservice allocation vector, such that each chromosome is a potential candidate that can allocate the multitude of correlated microservices onto the ad-hoc network topology.

The quality of each chromosome is estimated based on a corresponding fitness value of the evolutionary algorithm, wherein the fitness value corresponds to the total cost of allocation of the multitude of microservices.

In computational intelligence, an evolutionary algorithm is a subset of evolutionary computation, a generic population-based metaheuristic optimization algorithm. An evolutionary algorithm uses mechanisms inspired by biological evolution, such as reproduction, mutation, recombination, and selection. Candidate solutions to the optimization problem play the role of individuals in a population, and a fitness function with a corresponding fitness value determines the quality of the solutions. Evolution of the population then takes place after the repeated application of the above operators. In a genetic algorithm, a subset of evolutionary algorithms, a population of candidate solutions to an optimization problem is evolved toward better solutions. Each candidate solution comprises a set of properties, also referred to as its chromosomes, which can be mutated and altered.

In other words, the evolution usually starts from a population of randomly generated individuals, and is an iterative process, with the population in each iteration called a generation. In each generation, the fitness of every individual in the population is evaluated; wherein the fitness value is usually the value of the objective function in the optimization problem being solved. Thus, the quality of each potential solution, respectively a chromosome, is estimated based on the fitness value of the evolutionary algorithm. The fitness value corresponds to the total cost of allocation of microservices of each service. A higher fitness value represents a lower total energy cost and a better service allocation scheme.

In other words, to solve the problem of energy fair resource allocation of all microservices of all services, an evolutionary algorithm is used, wherein the total population of services is represented by several chromosomes. In each chromosome, each gene represents one service allocation vector as computed before.

Hence, each chromosome can be considered one of the candidates that can allocate the given services onto the ad-hoc-edge network topology.

In a fifth step, via the SDN controller, the elements of the multitude of chromosomes are arranged in descending order according to a corresponding fitness value for each of the multitude of chromosomes.

In a final step, via the SDN controller, a chromosome with the highest fitness value representing an optimized allocation of microservices in the ad-hoc network topology is selected, such that such that a resource consumption in the ad-hoc network is minimized.

Considering the task dependency between multiple devices in the ad-hoc-edge-cloud scenario, the complexity of solving the optimal service allocation strategy is hard to derive in polynomial time. Therefore, this invention proposes a mechanism able to ensure a fair allocation of interconnected microservices based on a bio-inspired approach that reflects the process of natural selection where the fittest individuals are selected. The proposed method based on an evolutionary algorithm allows distributed services to be executed in a full ad-hoc-edge-cloud continuum, in which several microservices can be processed inside ad-hoc networks while keeping the resource levels homogenous in the overall system.

Hence, the method is related to the deployment of services on an ad-hoc cloud, which is made of a set of mobile computational devices with limited resources, such as drones, aircraft or satellites, interconnected in an ad hoc manner, providing services with short latencies, by cooperating in their execution. Such ad-hoc cloud can be connected to edges of a fix network, such as a cellular base station or a satellite ground station, allowing the exploitation of a ad-hoc-edge-cloud continuum to run distributed services able to |process data collected by mobile computational devices.

In other words, the method for optimizing a modification of an ad-hoc-edge network is able to allocate a set of microservices, which define a service, among the devices in an ad-hoc-edge-cloud environment while considering their resource consumption.

Therefore, microservices are allocated to mobile computational devices, which can be drones, HAPS, aircraft, satellites, edge servers, or cloud servers, based on their resources, like energy status, consumption or bandwidth. The allocation of microservices is done in a weighted fair approach, for example in which microservices allocation is directly proportional to the energy status of each device, and inverse proportional to their energy consumption. This means that devices with more energy and with less consumption rates will execute more microservices. For instance, in order to fulfill the required service execution time, the allocation process may also take into account the delay between correlated microservices, keeping as much as possible correlated microservices in nearby devices.

In other words, mobile computational devices with more energy and with less consumption rates may execute more microservices, wherein delay and energy consumption in the ad-hoc network is minimized.

According to one embodiment, the step of verifying further comprises verifying that a storage of each mobile computational device is sufficient to store at least one of the microservices.

According to another embodiment, a part of the multitude of chromosomes with lower fitness value is discarded and a part of the multitude of chromosomes with higher fitness is selected for generating a new generation of a multitude of chromosomes.

According to another embodiment, the new generation of a multitude of chromosomes is generated via a crossover operation. In other words, a two-point crossover method is used for the crossover operation: The chromosomes are randomly selected with a certain crossover probability, and then two crossover points are randomly set at the corresponding position of the selected parent chromosomes.

According to another embodiment, the crossover operation is executed by combining a first chromosome with a second chromosome, wherein a gene of the first chromosome is exchanged with a gene of the second chromosome to create a third chromosome. In other words, the gene fragments from the first crossover point to the second crossover point are exchanged with each other to generate a new pair of chromosomes. Such crossover operation can inherit the characteristics of the parent generation while maintaining the diversity of the evolution.

According to another embodiment, the fitness value of the third chromosome is compared with each of the fitness values of the multitude of chromosomes, and wherein the third chromosome replaces the chromosome with the lowest fitness value. In other words, at the end of the crossover operation, the resource fairness of the newly created chromosome is compared with the fitness value of the parent chromosomes. If the new chromosomes have a higher fairness value, they will replace the chromosome with the lowest fitness/fairness value in the population.

The crossover process is repeated several times based on a random selection of pairs, within the remaining i-iteration chromosomes, excluding the chromosomes resulting from previous crossover operation on the same iteration. After all the crossover operations are done and the new population established, the selection process is repeated based on the fitness value of the chromosomes, leading to a next iteration.

The process ends when a new chromosome has an resource value that is superior to a preestablished threshold. At this point the chromosome with the highest fitness value is selected as representing the best allocation of microservices of all services in the ad-hoc-edge network.

After the establishment of the initial population of chromosomes, a genetic process starts in several interactions, corresponding each iteration to a selection process, in which a chromosome with a higher fitness value is selected for the next generation of the population, while chromosomes with lower fitness value are eliminated. In the i-th iteration/generation, the fitness value of each chromosome is calculated, after which the chromosomes are arranged in descending order according to their fitness value. Then, the latter half of chromosomes with lower fitness values are discarded, and the remaining half of chromosomes with higher fitness values in the population are used in a crossover operation. After the selection process, the remaining chromosomes are used to generate new chromosomes based on a crossover operation that combines two individual chromosomes in different ways to generate a new chromosome aiming to improve the fitness of the new population by retaining the genes with better parents for the next generation, this is by retaining the service combination that lead to a lower energy consumption.

According to another embodiment, the method is executed until a chromosome comprises a fitness value that is higher than a predefined threshold.

According to another embodiment, one of the chromosomes the corresponding multitude of genes is randomly transformed, by randomly changing the edge device or mobile computational device to which one of the microservices is assigned, to generate a mutated chromosome.

In other words, the previously described method may lead to poor evolution if all chromosomes have identical coded information. In this case a mutation process is used to enrich the diversity of new chromosomes. Although the crossover operation expands the search range, it is limited to various combinations of existing genes. The mutation operation makes chromosomes generate new genes, specifically new combinations of microservices allocation inside specific services, introduce new possibilities, and maintain the diversity of the population.

Chromosomes in the population usually mutate with a certain probability. Generally, chromosomes with lower fitness values have a larger mutation probability, while individuals with higher fitness values should have a lower mutation probability. Hence, the mutation process selects several chromosomes from the half group with lower fitness values, in a random manner. Afterwards the service allocation information of each selected chromosome is randomly transformed to cause a mutation in the chromosome. This process is carried out by randomly changing the devices to which the microservices are assigned.

According to another embodiment, the mutated chromosome is selected within a subset of chromosomes with lower fitness.

According to another embodiment, the method is executed until a mutated chromosome comprises a fitness value that is higher than a predefined threshold.

According to another embodiment, if a microservice is unverified, the unverified microservice is executed on a server.

According to another aspect, a system for executing a method for optimizing a modification of an ad-hoc-edge network with a resource-aware service allocation strategy for deployment of a multitude of correlated microservices, which define a service, on an ad-hoc-edge network topology comprising a multitude of edge devices and a multitude of mobile computational devices with limited resources, interconnected in an ad-hoc manner, comprises a processing unit, a multitude of computational devices and a multitude of edge devices.

The processing unit is adapted to process the evolutionary algorithm, wherein the multitude of computational devices are adapted to form an ad-hoc-edge network with an resource-aware service allocation strategy for deployment of a multitude of correlated microservices, which define a service, on an ad-hoc-edge network topology comprising a multitude of edge devices and a multitude of mobile computational devices with limited resources, interconnected in an ad-hoc manner.

According to another embodiment, the multitude of computational devices is selected from at least one of: Drones, UAV, High Altitude Pseudo Satellites, Satellites, Ships, Car, Electric Vehicles or Urban Air Mobility vehicles.

According to another embodiment, the multitude of mobile computational devices are interconnected via radio or optical wireless network links.

In comparison with other approaches that aim to allow an efficient allocation of service tasks between a group of mobile computational devices and a set of edge devices, the method for optimizing a modification of an ad-hoc-edge network with a resource-aware service allocation strategy for deployment of a multitude of correlated microservices, which define a service, on an ad-hoc-edge network topology comprising a multitude of edge devices and a multitude of mobile computational devices with limited resources, interconnected in an ad-hoc manner comprises various benefits. It not only considers direct communication between drones and cloud servers, but also communication between mobile computational devices, in a full ad-hoc-edge-cloud continuum. Furthermore, it considers the resource fairness, for instance energy consumption issues or bandwidth, that are important to improve the lifetime extension of mobile computational devices like flying-based networks, such as drones and HAPS, and the efficiency of flying networks encompassing aircraft and satellites. Furthermore, it ensures the allocation of microservices following a weighted fairness approach, being aware of the resources like energy status and consumption range of the mobile computational devices, for example heterogeneous flying devices.

In this context, a possible scenario assumes an ad-hoc-edge-cloud computing environment encompassing edge and cloud servers that have more computing power than any device in the ad-hoc network. It is also assumed that a cloud server has a better computing performance than an edge server. On the other hand, it is also assumed that edge and cloud servers induce more considerable overall delay to compute data collected from flying devices than when computation is done within the ad-hoc network. In terms of the ad-hoc network, it is assumed that flying devices are interconnected through wireless network links, radio or optical. Several deploying scenarios are possible, such as a drone/aircraft network connected to a set of edge devices via air-to-ground links (e.g. 5G), which are then connected to a cloud infrastructure.

Another scenario can be of a LEO constellation satellite system connected to edge devices collocated with ground stations that provide connectivity to a cloud infrastructure. A last possible scenario is a hybrid one, in which drones, aircrafts and satellites operate as data sources, being drones and aircrafts connected directly to the ground and/or to a satellite network. In this scenario edge devices can be collocated with satellite ground stations as well as cellular base stations.

Hence, the proposed bio-inspiring mechanism aims to allow an SDN controller to estimate the best allocation strategy for all microservices of several services that need to be computed in the ad-hoc-edge-cloud continuum, while minimizing the delay and energy consumption in the ad-hoc network. It is expected that the performance of the proposed mechanism will depend upon several parameters, such as the mutation probability and the amount of genetic interactions, as well as the size of the ad-hoc network.

### Brief description of the figures

Fig. 1 shows a flowchart of a method for optimizing a modification of an ad-hoc-edge network;
Fig. 2 shows a system for executing a method for optimizing a modification of an ad-hoc-edge network.

### Detailed description

The illustrations in the figures are schematic and not to scale. If the same reference signs are used in different figures in the following description of the figures, they designate identical or similar elements. However, identical or similar elements can also be designated by different reference symbols.

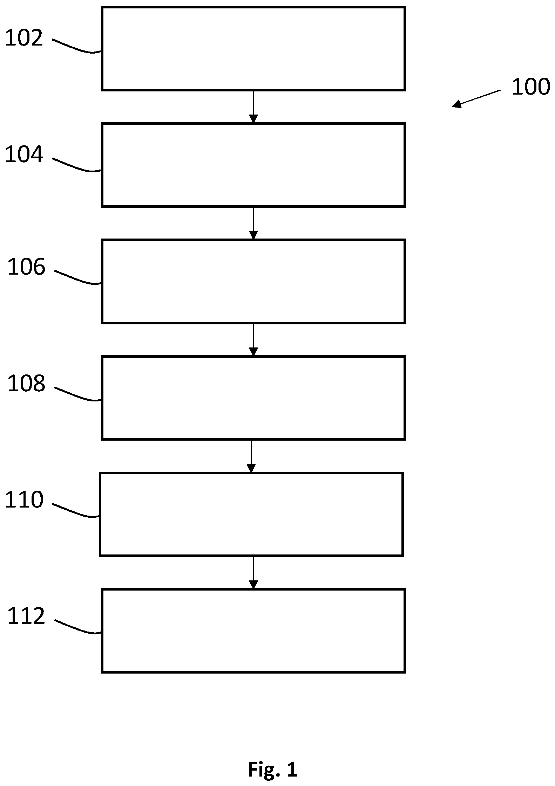

Fig. 1 shows a flowchart of a method 100 for optimizing a modification of an ad-hoc-edge network with a resource-aware service allocation strategy for deployment of a multitude of correlated microservices, which define a service, on an ad-hoc-edge network topology comprising a multitude of edge devices 56 and a multitude of mobile computational devices 54 with limited resources, interconnected in an ad-hoc manner, comprising the following steps:
Gathering 102, via a Software Defined Networking, SDN-, controller, network information of a current status of the ad-hoc-edge network.

Verifying 104, via the SDN controller, a possibility to accommodate each of the multitude of correlated microservices in the multitude of edge devices and the multitude of mobile computational devices, by verifying that a remaining energy of each mobile computational device 54 is sufficient to accommodate an execution time of at least one of the microservices, and/or that a bandwidth of a connection between one mobile computational device 54 and at least one neighboring mobile 54 computational device is sufficient for at least one of the microservices to receive an output of one of a precedent microservice.

Creating 106, via the SDN controller, a multitude of microservice allocation vectors, wherein each microservice allocation vector is assigned to one of the multitude of correlated microservices and to one of the multitude of edge devices or to one of the multitude of mobile computational devices 54.

Validating 108, via the SDN controller, a deployment of the multitude of correlated microservices based on a genetic operation, via an evolutionary algorithm, in which the service is represented by a multitude of chromosomes, each chromosome comprising a multitude of genes, wherein in each chromosome, each gene represents one corresponding microservice allocation vector, such that each chromosome is a potential candidate that can allocate the multitude of correlated microservices onto the ad-hoc network topology, wherein the quality of each chromosome is estimated based on a corresponding fitness value of the evolutionary algorithm, wherein the fitness value corresponds to the total cost of allocation of the multitude of microservices.

Arranging 110, via the SDN controller, the multitude of chromosomes in descending order according to a corresponding fitness value for each of the multitude of chromosomes.

Selecting 112, via the SDN controller, a chromosome with the highest fitness value representing an optimized allocation of microservices in the ad-hoc network topology, such that a resource consumption in the ad-hoc network is minimized.

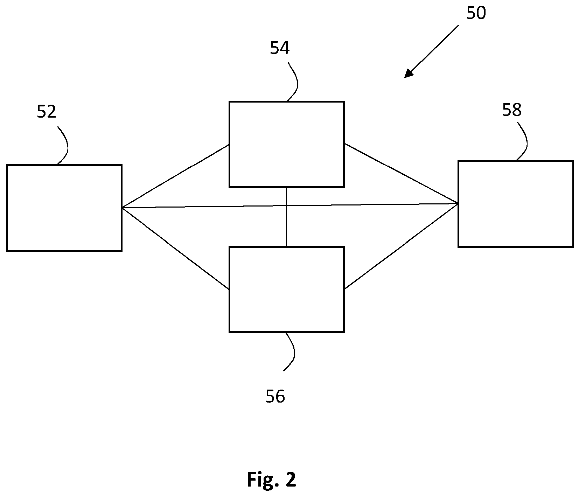

Fig. 2 shows a system 50 for executing a method 100 for optimizing a modification of an ad-hoc-edge network with a resource-aware service allocation strategy for deployment of a multitude of correlated microservices, which define a service, on an ad-hoc-edge network topology comprising a multitude of edge devices 56 and a multitude of mobile computational devices 54 with limited resources. The system 50 comprises a processing unit 52 comprising a Software Defined Networking, SDN-, controller, a multitude of mobile computational devices 54 and a multitude of edge devices 56. The processing unit 52 is adapted to process the evolutionary algorithm, wherein the multitude of computational devices 54 are adapted to form an ad-hoc-edge network with an resource-aware service allocation strategy for deployment of a multitude of correlated microservices, which define a service, on an ad-hoc-edge network topology comprising a multitude of edge devices 56 and a multitude of mobile computational devices 54 with limited resources, interconnected in an ad-hoc manner. If a microservice is unverified, the unverified microservice is executed on a server 58.

Hence, it is assumed that in any of the possible deployment scenarios there is connectivity, potentially intermittent, to a control entity in the ground that will execute the proposed genetic algorithm based on information collected from all the devices in the ad-hoc-edge-cloud continuum, as well as the description of services based on a set of microservices.

Such a control entity operates as the Software Defined Networking, SDN-, controller that uses standard protocols to install microservices in different devices in the ad-hoc-edge-cloud continuum.

In other words, the proposed method aims to exploit the resources made available in the ad-hoc-edge-cloud continuum to allocate multiple services as close as possible from the data sources and end-users, in order to reduce latency, while at the same time in a resource weighted fair manner, in order to ensure an extended lifetime and performance of the ad-hoc network. It is assumed that each service consists of multiple correlated microservices, which are constantly or periodically exchanging data. Services can be allocated and executed on each device of the ad-hoc-edge-cloud continuum. Each device consumes a different amount of energy according to the amount of allocated microservices. As more microservices are assigned to a specific device, its energy consumption increases.

Therefore, it is necessary to allocate microservices to each device to equalize the consumption, taking into account device resources like energy status, microservice execution times, bandwidth or other limited resources.

## Claims

1. Method (100) for optimizing a modification of an ad-hoc-edge network with a resource-aware service allocation strategy for deployment of a multitude of correlated microservices, which define a service, on an ad-hoc-edge network topology comprising a multitude of edge devices (56) and a multitude of mobile computational devices (54) with limited resources, interconnected in an ad-hoc manner, comprising the following steps:
Gathering (102), via a Software Defined Networking, SDN-, controller (52), network information of a current status of the ad-hoc-edge network,
Verifying (104), via the SDN controller (52), a possibility to accommodate each of the multitude of correlated microservices in the multitude of edge devices and the multitude of mobile computational devices, by verifying:
that a remaining energy of each mobile computational device (54) is sufficient to accommodate an execution time of at least one of the microservices, and/or
that a bandwidth of a connection between one mobile computational device (54) and at least one neighboring mobile (54) computational device is sufficient for at least one of the microservices to receive an output of one of a precedent microservice,
Creating (106), via the SDN controller (52), a multitude of microservice allocation vectors, wherein each microservice allocation vector is assigned to one of the multitude of correlated microservices and to one of the multitude of edge devices or to one of the multitude of mobile computational devices (54),
Validating (108), via the SDN controller (52), a deployment of the multitude of correlated microservices based on a genetic operation, via an evolutionary algorithm, in which the service is represented by a multitude of chromosomes, each chromosome comprising a multitude of genes, wherein in each chromosome, each gene represents one corresponding microservice allocation vector, such that each chromosome is a potential candidate that can allocate the multitude of correlated microservices onto the ad-hoc network topology, wherein the quality of each chromosome is estimated based on a corresponding fitness value of the evolutionary algorithm, wherein the fitness value corresponds to the total cost of allocation of the multitude of microservices,
Arranging (110), via the SDN controller (52), the multitude of chromosomes in descending order according to a corresponding fitness value for each of the multitude of chromosomes,
Selecting (112), via the SDN controller (52), a chromosome with the highest fitness value representing an optimized allocation of microservices in the ad-hoc network topology,
Allocating, via the SDN controller, the multitude of correlated microservices, which define a service, on the ad-hoc-edge network topology comprising the multitude of edge devices (56) and the multitude of mobile computational devices (54) with limited resources, interconnected in an ad-hoc manner, based on the chromosome with the highest fitness value representing an optimized allocation of microservices in the ad-hoc network topology,
such that a resource consumption in the ad-hoc network is minimized.

2. Method (100) according to claim 1,
wherein the step of verifying further comprises verifying:
that a storage of each mobile computational device (54) is sufficient to store at least one of the microservices.

3. Method (100) according to claim 1,
wherein a part of the multitude of chromosomes with lower fitness value is discarded and a part of the multitude of chromosomes with higher fitness is selected for generating a new generation of a multitude of chromosomes.

4. Method (100) according to claim 3,
wherein the new generation of a multitude of chromosomes is generated via a crossover operation.

5. Method (100) according to claim 4,
wherein the crossover operation is executed by combining a first chromosome with a second chromosome, wherein a gene of the first chromosome is exchanged with a gene of the second chromosome to create a third chromosome.

6. Method (100) according to claim 5,
wherein the fitness value of the third chromosome is compared with each of the fitness values of the multitude of chromosomes, and wherein the third chromosome replaces the chromosome with the lowest fitness value.

7. Method (100) according to claim 6,
wherein the method (100) is executed until a chromosome comprises a fitness value that is higher than a predefined threshold.

8. Method (100) according one of the preceding claims,
wherein in one of the chromosomes the corresponding multitude of genes is randomly transformed, by randomly changing an edge device (65) or an mobile computational device (56) to which one of the microservices is assigned, to generate a mutated chromosome.

9. Method (100) according to claim 8,
wherein the mutated chromosome is selected within a subset of chromosomes with lower fitness.

10. Method (100) according to claim 9,
wherein in the method is executed until a mutated chromosome comprises a fitness value that is higher than a predefined threshold.

11. Method (100) according to one of the preceding claims,
wherein if a microservice is unverified, the unverified microservice is executed on a server (58).

12. System (50) for executing a method (100) according to claim 1 to 11,
comprising:
a processing unit (52), comprising a Software Defined Networking, SDN-, controller;
a multitude of mobile computational devices (54),
a multitude of edge devices (56),
wherein the processing unit (52) is adapted to process the evolutionary algorithm,
wherein the multitude of computational devices (54) are adapted to form an ad-hoc-edge network with an resource-aware service allocation strategy for deployment of a multitude of correlated microservices, which define a service, on an ad-hoc-edge network topology comprising a multitude of edge devices (56) and a multitude of mobile computational devices (54) with limited resources, interconnected in an ad-hoc manner,
wherein the system is configured to execute all the steps of the method according to claim 1 to 11.

13. System (50) according to claim 12,
wherein the multitude of mobile computational devices (54) is selected from at least one of: Drones, UAV, High Altitude Pseudo Satellites, Satellites, Ships, Car, Electric Vehicles or Urban Air Mobility vehicles.

14. System (50) according to claim 13,
wherein the multitude of mobile computational devices (54) are interconnected via radio or optical wireless network links.

## Patentansprüche

1. Verfahren (100) zum Optimieren einer Modifikation eines Ad-hoc-Edge-Netzwerks mit einer ressourcenbewussten Dienstzuweisungsstrategie für den Einsatz einer Vielzahl von korrelierten Mikrodiensten, die einen Dienst definieren, auf einer Ad-hoc-Edge-Netzwerktopologie, die eine Vielzahl von Edge-Vorrichtungen (56) und eine Vielzahl von mobilen Rechenvorrichtungen (54) mit begrenzten Ressourcen umfasst, die ad-hoc miteinander verbunden sind, umfassend die folgenden Schritte:
Erfassen (102) von Netzwerkinformationen eines aktuellen Status des Ad-hoc-Edge-Netzwerks über eine Software-Defined-Networking-, SDN-, Steuerung (52),
Verifizieren (104) über die SDN-Steuerung (52) einer Möglichkeit, jeden der Vielzahl von korrelierten Mikrodiensten in der Vielzahl von Edge-Vorrichtungen und der Vielzahl von mobilen Rechenvorrichtungen unterzubringen, durch Verifizieren:
dass eine verbleibende Energie jeder mobilen Rechenvorrichtung (54) ausreichend ist, um eine Ausführungszeit mindestens eines der Mikrodienste unterzubringen, und/oder
dass eine Bandbreite einer Verbindung zwischen einer mobilen Rechenvorrichtung (54) und mindestens einer benachbarten mobilen Rechenvorrichtung (54) für mindestens einen der Mikrodienste ausreichend ist, um eine Ausgabe eines vorhergehenden Mikrodienstes zu empfangen,
Erzeugen (106) einer Vielzahl von Mikrodienstzuweisungsvektoren über die SDN-Steuerung (52), wobei jeder Mikrodienstzuweisungsvektor einem der Vielzahl von korrelierten Mikrodiensten und einer der Vielzahl von Edge-Vorrichtungen oder einer der Vielzahl von mobilen Rechenvorrichtungen (54) zugewiesen ist,
Validieren (108) eines Einsatzes der Vielzahl von korrelierten Mikrodiensten über die SDN-Steuerung (52) basierend auf einer genetischen Operation über einen evolutionären Algorithmus, in dem der Dienst durch eine Vielzahl von Chromosomen dargestellt wird, wobei jedes Chromosom eine Vielzahl von Genen umfasst, wobei in jedem Chromosom jedes Gen einen entsprechenden Mikrodienstzuweisungsvektor darstellt, so dass jedes Chromosom ein potentieller Kandidat ist, der die Vielzahl von korrelierten Mikrodiensten auf die Ad-hoc-Netzwerktopologie zuweisen kann, wobei die Qualität jedes Chromosoms basierend auf einem entsprechenden Fitnesswert des evolutionären Algorithmus geschätzt wird, wobei der Fitnesswert den Gesamtkosten der Zuweisung der Vielzahl von Mikrodiensten entspricht,
Anordnen (110) der Vielzahl von Chromosomen in absteigender Reihenfolge gemäß einem entsprechenden Fitnesswert für jedes der Vielzahl von Chromosomen über die SDN-Steuerung (52),
Auswählen (112) eines Chromosoms mit dem höchsten Fitnesswert, der eine optimierte Zuweisung von Mikrodiensten in der Ad-hoc-Netzwerktopologie darstellt, über die SDN-Steuerung (52),
Zuweisen der Vielzahl von korrelierten Mikrodiensten, die einen Dienst definieren, über die SDN-Steuerung auf der Ad-hoc-Edge-Netzwerktopologie, die die Vielzahl von Edge-Vorrichtungen (56) und die Vielzahl von mobilen Rechenvorrichtungen (54) mit begrenzten Ressourcen umfasst, die ad-hoc miteinander verbunden sind, basierend auf dem Chromosom mit dem höchsten Fitnesswert, der eine optimierte Zuweisung von Mikrodiensten in der Ad-hoc-Netzwerktopologie darstellt,
so dass ein Ressourcenverbrauch in dem Ad-hoc-Netzwerk minimiert wird.

2. Verfahren (100) nach Anspruch 1,
wobei der Schritt des Verifizierens ferner das Verifizieren umfasst:
dass ein Speicher jeder mobilen Rechenvorrichtung (54) ausreichend ist, um mindestens einen der Mikrodienste zu speichern.

3. Verfahren (100) nach Anspruch 1,
wobei ein Teil der Vielzahl von Chromosomen mit niedrigerem Fitnesswert verworfen wird und ein Teil der Vielzahl von Chromosomen mit höherer Fitness ausgewählt wird, um eine neue Generation einer Vielzahl von Chromosomen zu erzeugen.

4. Verfahren (100) nach Anspruch 3,
wobei die neue Generation einer Vielzahl von Chromosomen über eine Crossover-Operation erzeugt wird.

5. Verfahren (100) nach Anspruch 4,
wobei die Crossover-Operation ausgeführt wird, indem ein erstes Chromosom mit einem zweiten Chromosom kombiniert wird, wobei ein Gen des ersten Chromosoms mit einem Gen des zweiten Chromosoms ausgetauscht wird, um ein drittes Chromosom zu erzeugen.

6. Verfahren (100) nach Anspruch 5,
wobei der Fitnesswert des dritten Chromosoms mit jedem der Fitnesswerte der Vielzahl von Chromosomen verglichen wird und wobei das dritte Chromosom das Chromosom mit dem niedrigsten Fitnesswert ersetzt.

7. Verfahren (100) nach Anspruch 6,
wobei das Verfahren (100) ausgeführt wird, bis ein Chromosom einen Fitnesswert umfasst, der höher als ein vordefinierter Schwellenwert ist.

8. Verfahren (100) nach einem der vorhergehenden Ansprüche,
wobei in einem der Chromosomen die entsprechende Vielzahl von Genen zufällig transformiert wird, indem eine Edge-Vorrichtung (65) oder eine mobile Rechenvorrichtung (56), der einer der Mikrodienste zugewiesen ist, zufällig geändert wird, um ein mutiertes Chromosom zu erzeugen.

9. Verfahren (100) nach Anspruch 8,
wobei das mutierte Chromosom innerhalb einer Teilmenge von Chromosomen mit niedrigerer Fitness ausgewählt wird.

10. Verfahren (100) nach Anspruch 9,
wobei das Verfahren ausgeführt wird, bis ein mutiertes Chromosom einen Fitnesswert umfasst, der höher als ein vordefinierter Schwellenwert ist.

11. Verfahren (100) nach einem der vorhergehenden Ansprüche,
wobei, wenn ein Mikrodienst nicht verifiziert ist, der nicht verifizierte Mikrodienst auf einem Server (58) ausgeführt wird.

12. System (50) zum Ausführen eines Verfahrens (100) nach Anspruch 1 bis 11, umfassend:
eine Verarbeitungseinheit (52), die eine Software-Defined-Networking-, SDN-, Steuerung umfasst;
eine Vielzahl von mobilen Rechenvorrichtungen (54),
eine Vielzahl von Edge-Vorrichtungen (56),
wobei die Verarbeitungseinheit (52) angepasst ist, um den evolutionären Algorithmus zu verarbeiten,
wobei die Vielzahl von Rechenvorrichtungen (54) angepasst ist, um ein Ad-hoc-Edge-Netzwerk mit einer ressourcenbewussten Dienstzuweisungsstrategie für den Einsatz einer Vielzahl von korrelierten Mikrodiensten, die einen Dienst definieren, auf einer Ad-hoc-Edge-Netzwerktopologie zu bilden, die eine Vielzahl von Edge-Vorrichtungen (56) und eine Vielzahl von mobilen Rechenvorrichtungen (54) mit begrenzten Ressourcen umfasst, die ad-hoc miteinander verbunden sind, wobei das System konfiguriert ist, alle Schritte des Verfahrens nach Anspruch 1 bis 11 auszuführen.

13. System (50) nach Anspruch 12,
wobei die Vielzahl von mobilen Rechenvorrichtungen (54) ausgewählt ist aus mindestens einem von: Drohnen, UAV, Pseudosatelliten in großer Höhe, Satelliten, Schiffen, Autos, Elektrofahrzeugen oder Fahrzeugen für die urbane Luftmobilität.

14. System (50) nach Anspruch 13,
wobei die Vielzahl von mobilen Rechenvorrichtungen (54) über Funk- oder optische drahtlose Netzwerkverbindungen miteinander verbunden sind.

## Revendications

1. Procédé (100) pour optimiser une modification d'un réseau de bord ad hoc avec une stratégie d'allocation de service sensible aux ressources pour le déploiement d'une multitude de microservices corrélés, qui définissent un service, sur une topologie de réseau de bord ad hoc comprenant une multitude de dispositifs de bord (56) et une multitude de dispositifs de calcul mobiles (54) avec des ressources limitées, interconnectés de manière ad hoc, comprenant les étapes suivantes:
rassembler (102), par l'intermédiaire d'un contrôleur de réseautage défini par logiciel, SDN, (52), des informations de réseau d'un état actuel du réseau de bord ad hoc,
vérifier (104), par l'intermédiaire du contrôleur SDN (52), une possibilité d'accueillir chacun de la multitude de microservices corrélés dans la multitude de dispositifs de bord et la multitude de dispositifs de calcul mobiles, en vérifiant:
qu'une énergie restante de chaque dispositif de calcul mobile (54) est suffisante pour accueillir un temps d'exécution d'au moins l'un des microservices, et/ou
qu'une largeur de bande d'une connexion entre un dispositif de calcul mobile (54) et au moins un dispositif de calcul mobile voisin (54) est suffisante pour qu'au moins l'un des microservices reçoive une sortie de l'un d'un microservice précédent,
créer (106), par l'intermédiaire du contrôleur SDN (52), une multitude de vecteurs d'allocation de microservice, dans lequel chaque vecteur d'allocation de microservice est attribué à l'un de la multitude de microservices corrélés et à l'un de la multitude de dispositifs de bord ou à l'un de la multitude de dispositifs de calcul mobiles (54),
valider (108), par l'intermédiaire du contrôleur SDN (52), un déploiement de la multitude de microservices corrélés sur la base d'une opération génétique, par l'intermédiaire d'un algorithme évolutif, dans lequel le service est représenté par une multitude de chromosomes, chaque chromosome comprenant une multitude de gènes, dans lequel dans chaque chromosome, chaque gène représente un vecteur d'allocation de microservice correspondant, de sorte que chaque chromosome est un candidat potentiel qui peut attribuer la multitude de microservices corrélés sur la topologie de réseau ad hoc, dans lequel la qualité de chaque chromosome est estimée sur la base d'une valeur d'adaptation correspondante de l'algorithme évolutif, dans lequel la valeur d'adaptation correspond au coût total d'allocation de la multitude de microservices,
agencer (110), par l'intermédiaire du contrôleur SDN (52), la multitude de chromosomes dans un ordre décroissant selon une valeur d'adaptation correspondante pour chacun de la multitude de chromosomes,
sélectionner (112), par l'intermédiaire du contrôleur SDN (52), un chromosome avec la valeur d'adaptation la plus élevée représentant une allocation optimisée de microservices dans la topologie de réseau ad hoc,
attribuer, par l'intermédiaire du contrôleur SDN, la multitude de microservices corrélés, qui définissent un service, sur la topologie de réseau de bord ad hoc comprenant la multitude de dispositifs de bord (56) et la multitude de dispositifs de calcul mobiles (54) avec des ressources limitées, interconnectés de manière ad hoc, sur la base du chromosome avec la valeur d'adaptation la plus élevée représentant une allocation optimisée de microservices dans la topologie de réseau ad hoc,
de sorte qu'une consommation de ressources dans le réseau ad hoc est minimisée.

2. Procédé (100) selon la revendication 1,
dans lequel l'étape de vérification comprend en outre la vérification:
qu'un stockage de chaque dispositif de calcul mobile (54) est suffisant pour stocker au moins l'un des microservices.

3. Procédé (100) selon la revendication 1,
dans lequel une partie de la multitude de chromosomes avec une valeur d'adaptation inférieure est rejetée et une partie de la multitude de chromosomes avec une adaptation supérieure est sélectionnée pour générer une nouvelle génération d'une multitude de chromosomes.

4. Procédé (100) selon la revendication 3,
dans lequel la nouvelle génération d'une multitude de chromosomes est générée par l'intermédiaire d'une opération de croisement.

5. Procédé (100) selon la revendication 4,
dans lequel l'opération de croisement est exécutée en combinant un premier chromosome avec un deuxième chromosome, dans lequel un gène du premier chromosome est échangé avec un gène du deuxième chromosome pour créer un troisième chromosome.

6. Procédé (100) selon la revendication 5,
dans lequel la valeur d'adaptation du troisième chromosome est comparée à chacune des valeurs d'adaptation de la multitude de chromosomes, et dans lequel le troisième chromosome remplace le chromosome avec la valeur d'adaptation la plus basse.

7. Procédé (100) selon la revendication 6,
dans lequel le procédé (100) est exécuté jusqu'à ce qu'un chromosome comprenne une valeur d'adaptation qui est supérieure à un seuil prédéfini.

8. Procédé (100) selon l'une des revendications précédentes,
dans lequel, dans l'un des chromosomes, la multitude correspondante de gènes est transformée de manière aléatoire, en changeant de manière aléatoire un dispositif de bord (65) ou un dispositif de calcul mobile (56) auquel l'un des microservices est attribué, pour générer un chromosome muté.

9. Procédé (100) selon la revendication 8,
dans lequel le chromosome muté est sélectionné dans un sous-ensemble de chromosomes avec une adaptation inférieure.

10. Procédé (100) selon la revendication 9,
dans lequel le procédé est exécuté jusqu'à ce qu'un chromosome muté comprenne une valeur d'adaptation qui est supérieure à un seuil prédéfini.

11. Procédé (100) selon l'une des revendications précédentes,
dans lequel si un microservice n'est pas vérifié, le microservice non vérifié est exécuté sur un serveur (58).

12. Système (50) pour exécuter un procédé (100) selon les revendications 1 à 11, comprenant:
une unité de traitement (52), comprenant un contrôleur de réseautage défini par logiciel, SDN;
une multitude de dispositifs de calcul mobiles (54),
une multitude de dispositifs de bord (56),
dans lequel l'unité de traitement (52) est adaptée pour traiter l'algorithme évolutif,
dans lequel la multitude de dispositifs de calcul (54) sont adaptés pour former un réseau de bord ad hoc avec une stratégie d'allocation de service sensible aux ressources pour le déploiement d'une multitude de microservices corrélés, qui définissent un service, sur une topologie de réseau de bord ad hoc comprenant une multitude de dispositifs de bord (56) et une multitude de dispositifs de calcul mobiles (54) avec des ressources limitées, interconnectés de manière ad hoc, dans lequel le système est configuré pour exécuter toutes les étapes du procédé selon les revendications 1 à 11.

13. Système (50) selon la revendication 12,
dans lequel la multitude de dispositifs de calcul mobiles (54) est sélectionnée parmi au moins l'un parmi: des drones, des UAV, des pseudo-satellites à haute altitude, des satellites, des navires, des voitures, des véhicules électriques ou des véhicules de mobilité aérienne urbaine.

14. Système (50) selon la revendication 13,
dans lequel la multitude de dispositifs de calcul mobiles (54) sont interconnectés via radio ou des liaisons de réseau optique sans fil.
